# EUROPEAN PATENT SPECIFICATION

(11) **EP 3 698 643 B1**
(45) Date of publication and mention of the grant of the patent: **14.05.2025**
(21) Application number: 20155228.8
(22) Date of filing: 03.02.2020
(51) Int. Cl.: A23K 20/158, A23K 20/163, A23L 21/25, A23K 10/30, A23K 50/90, A23K 10/16

(54) **THE METHOD OF HEALTH MAINTAINING AND TREATING OF THE HONEY BEE USING HERBAL ADDITIVES**
VERFAHREN ZUR ERHALTUNG DER GESUNDHEIT UND BEHANDLUNG VON HONIGBIENEN UNTER VERWENDUNG PFLANZLICHER ZUSATZSTOFFE
PROCÉDÉ DE MAINTIEN DE LA SANTÉ ET DE TRAITEMENT D'ABEILLES MELLIFÈRES UTILISANT DES ADDITIFS À BASE D'HERBES

(30) Priority: 04.02.2019 LT 2019019; 04.02.2019 LT 2019007
(43) Date of publication of application: 26.08.2020
(73) Proprietor: Pileckas, Juozas, 62235 Alytus (LT)
(72) Inventor: Pileckas, Juozas, 62235 Alytus (LT)
(74) Representative: Klimaitiene, Otilija

(56) References cited:
- EP-A1- 2 460 419
- WO-A1-2008/136730
- WO-A1-2017/007765
- CN-A- 105 795 167
- KR-A- 20110 092 177
- US-A1- 2007 026 765

## Description

### FIELD OF THE INVENTION

The invention relates to the care of honey bees (Apis mellifera). Specifically, the invention discloses a composition for use in treating bees, with the use of certain medicinal plants. The bees are fed and/or sprayed with the composition made of natural origin with additives of these plants. Furthermore, a modified natural honey can be harvested when the bees are partially or completely fed by this natural composition and bring it in their abdomen sacs to collect in honeycombs (honeycomb frames).

### BACKGROUND ART

The feeding and the care of honey bees (Apis mellifera) and the production of natural honey are extensively studied due to the unique qualities, such as maintaining bee health and workability, producing natural honey with unique and healing properties, and using honey by people for food and as a medicine.

It has long been known that bee products have nutritional and healing properties. Of bee products, honey is the most widely used. Usually, bees collect their feeding supplies in the honeycombs inside the hives. Natural way of honey production comprises a process, where the bees collect the plant blossom nectar by carrying it in their honey sacs, and when after some time the nectar in honeycombs becomes a honey.

In cultivated beekeeping, people take some honey from the honeycombs for their own use. In addition, bees are also fed with a man-made bee food, for example, in the event of shortage of their own food in the hive or during a cold winter.

Honey bees, depending on the honey gathering and natural conditions, may become weak, sick and may not be able to produce the honey. Food shortage leads to reduced bees' ability to produce honey and poorer health, and bees can be affected by parasites, where Varroa mites or varroatosis are among the most dangerous.

Beekeepers know ways to care for and feed their bees, to encourage them to produce more honey, to encourage them to pollinate the plants, and to naturally regulate the quality and properties of the honey they harvest, or produce selective honey with certain substances and specific healing properties. Selective honey, when used in a particular way, can help treat certain ailments or improve overall health.

Feeding of bees with syrups containing plant additives is described in several patent applications. U.S. Patent Application US2011039001A1 describes a bee food production method, wherein the bee food is composed of plant fruits, leaves, seeds, roots, after processing and blending with polysaccharides. Chinese patent application CN108419757A describes a method for the maintenance of bee hibernation, which, in addition to preparing hives, treating bees with miticides, also deals with bee food, which includes plant-based components, such as carrots, alfalfa seeds, spirulina blue-green algae, and licorice.

Bee treatment and curative nutrition with natural additives is described in U.S. Patent Application US20070026765A1. According to US20070026765A1, bees are treated by spraying with an aqueous solution containing essential oils of creeping wintergreen, cinnamon, lemongrass, mint, rosemary, peppermint and other plants. Another, non-patent scientific source https://actavet.vfu.cz/83/1/0009/ discloses the use of various vegetable essential oils to treat bees against American foulbrood and its pathogen Paenibacillus larvae.

Production of selective honey with modified composition is described in several patents. Japanese patent JPS6121060 (B2) of 1986 describes the production of secondary honey with Chinese herbal extracts, which is used to make beverages. German patent application DE4034955 refers to the production of secondary honey by feeding bees with syrup from honey and herb extracts, and the advantage of this method of production is that herbal additives are not separated from honey during production, and their addition thus naturally prevents unwanted microorganisms from getting into the honey during mixing process.

The use of selective honey with modified composition and targeted healing properties for human and health promotion is described in Russian patents: the effect claimed in RU2013127697 is the use of the resulting selective honey for compensating nutrient deficiency, enhancing body's overall resistance to adverse environmental factors, and promoting binding and removal of foreign biological materials from the body. The patent RU2129361C1 describes honey with enhanced biological activity properties, which is recommended for use in treatment of respiratory diseases; an efficient and simple method of producing such honey is also described in the patent. Patent RU2355164 describes honey with enhanced biological activity properties, such as antioxidant, adaptogenic, anti-stress, and restorative properties for human health. In these patents, selective honey is made by adding to the bee feeding syrup natural herbal additives, such as alfalfa, bean tree, eucalyptus leaves, anise leaves and fruits, poppy petals and many others.

The use of special purpose additives for production of selective honey with intended healing properties is often found in international patent applications. Patent application WO2017013661A1 describes production of a special honey with THC and CBD hemp oil additives. The patent describes a bee feeding mixture comprised of bee food base and cannabinoids THC and / or CBD, honey production methods, honey obtained by these methods, and the use of this honey for therapeutic purposes in reducing pain in patients with many different pain conditions. Another international patent application, WO2006080019A1, describes a method for producing bee honey, explaining how to prepare the bee food, feed it to the bees and then take the honey after processing it by the bees. The distinguishing feature of this method is that a mammalian blood is added to the bee food on purpose, and the honey after such feeding contains blood constituents accordingly. This honey is made for a special medical purpose; it is prescribed for the patients during chemotherapy treatment to reduce various side effects of the chemotherapy treatment.

**The Chinese patent application** CN105795167A **describes a bee feeding additive comprising a list (over 20) of different medical plants. This composition includes also sea buckthorn (Fructus Hippophae), together with many other medical plants, some of them Chinese medical herbs.** CN105795167A **also discloses this mixed additive to have a positive effect** on increasing immunity of bees to mites and other diseases, breeding rate, appetite.

Review of prior art inventions has shown that different technical solutions are used to feed bees, treat bees against their diseases, extract selective natural honey with modified composition and healing properties. Also, various medical plant and animal additives are used to produce honey with the intended healing properties. Disadvantage of these solutions is that when bees are fed with mixtures containing additives, such technical solutions seek to achieve different objectives, but these different objectives serve some narrow purpose and do not complement each other for the common benefit of bees and humans. Additives of certain plants are more suitable for feeding and treating bees, but are not necessarily useful and delicious to humans (for example, essential oils for treating bees against ticks). The properties of other plant and honey additives are intended for treating humans, but are not necessary or somehow clearly useful to bees, such as THC and CBD cannabinoids as disclosed in International Patent Application WO2017013661A1 or mammalian blood additives as disclosed in International Patent Application WO2006080019A1. Purpose of patent application US2011039001A1, which discloses feeding of bees with mixture with plant additives, is solely to feed the bees and to provide them with plant nutrients and vitamins, but does not mention the selective production of good-tasting honey for people and, moreover, the healing effects of honey for people. As a result, implementation of several different compositions using plant additives for feeding bees is complicated and has the following disadvantages: it is not always favorable to bees, or too complicated and inefficient for the beekeeper to implement, or may not produce a good product for people, i.e. natural, good-tasting and useful bee honey. The objective of the present invention is combining certain medicinal plants for use in conventional bee feeding, maintaining bee health and productivity, and producing selective and good-tasting honey having medicinal properties and / or special therapeutic uses for people.

### SUMMARY

In order to avoid the above mentioned disadvantages of bee treatment the present invention provides a composition comprising sea buckthorn berries with their natural oil and mold for use in a method for the treatment of honey bee families against varroatosis and American foulbrood.

The properties of medicinal plants can be more pronounced and disclosed when added to honey due to the medicinal and antibacterial properties of honey and the ease with which the honey is absorbed, compared to using medicinal plants, their teas or extracts alone (as disclosed in patent application WO2017013661A1). Therefore, proper processing of medicinal plants and incorporation of extracts of these plants into the natural honey production process can better enhance the effect of active ingredients of medicinal plants in selective honey than using these plants or their extracts alone, without honey or only by mechanical mixing them with honey.

The invented composition for use in a method for the treatment of bees is prepared and used by following steps: preparing a bee feeding syrup, wherein the sea buckthorn berries with their natural oil and mold, are mixed with honey and water in appropriate proportions; feeding, sprinkling or spraying honey bees with the composition.

The present invention is defined by the independent claim 1. The specific embodiments of the invention are defined by the dependent claims from 2 to 8.

### DESCRIPTION OF DRAWINGS

The drawing figures are provided as a reference to possible embodiments only and are not intended to limit the scope of the invention in any way. Neither of the drawings and the graphs presented herein should be construed as limiting the scope of the invention, but merely as an example of possible embodiment.
- Fig. 1: Means for feeding bees with syrup in hive and installation thereof.
- Fig. 2: Process of feeding bees with medicinal syrup and the results obtained in the process.
- Fig. 3: Hive with bee outlet for feeding bees with medicinal syrup and obtaining selective honey of known composition according to production versions 24.5 and 24.6.
- Fig. 4: Structure of bee outlet between different levels of the hive.

### DRAWINGS - Reference numerals

**1** bee hive;
**2** top of the hive (hood), removed;
**3** bee-entrance;
**4** honeycombs with frames, installed in the hive;
**6, 7** bee feeding syrup, to be fed into the bee-feeder;
**10** bee-feeder;
**11** bee-feeder trough containing bee feeding syrup;
**12** bee-feeder top cover, transparent;
**13** bee feeding syrup inlet with sieve;
**14** a wooden grill for the bees to sit, floating on the surface of the feeding syrup;
**15** elevated openings in the bottom of the trough for bees to get into the bee-feeder;
**20** step of selecting medicinal plant additives for bee feeding syrup;
**21** step of selecting the components of the bee feeding syrup and their proportions;
**22** bee feeding syrup preparation step;
**23** selection of bee feeding pattern and a result to be achieved;
**24.1-24.6** bee feeding patterns and their intended / expected outcomes;
**30** multilevel hive, with separated upper levels, ready to feed bees with syrup and harvest selective honey;
**31** levels of bee colony (family) with the honeycombs;
**32** external bee-entrance of the hive;
**33** hive level separation segment, with the bee outlet and ventilation;
**34** bee outlet between hive levels, with ventilation grill;
**35** lever for toggling bee outlet states;
**36** two states of bee outlet: the bee entry to the upper levels and bee exit from the upper levels;
**37** passages for bees in the bee outlet;
**38** air ventilation grille in the bee outlet (between levels of the hive);
**39** second disk of the bee outlet with troughs;
**40** additional levels of the hive with honeycomb frames, intended to harvest selective honey from the feeder syrup only;
**41** bee-feeder with syrup placed on the levels of the hive for selective honey;
**42** a wooden grill for the bees to sit, floating on the surface of the feeding syrup;
**43** feeder opening for bees to move and carry the syrup from the feeder to the honeycombs of the lower levels;
**44** transparent top cover of the feeder;
**45** opening for feeding the syrup into the feeder, with sieve / ventilation;
**46** bee feeding syrup with medicinal plant additives to be poured into the feeder;
**48** top cover of the hive (hood), impermeable to light, heat and moisture, with a slot matching the syrup pouring opening;
**51** tapering passages of the bee outlet.

### DETAILED DESCRIPTION OF EMBODIMENTS

Embodiments of the invention will be described hereinafter with the references to the drawings, but embodiments of the invention are not limited to the embodiments disclosed herein, and various modifications of the embodiments are possible.

**Plant additives in bee feeding syrup.** Present invention employs
- Sea buckthorn (*Hippophae rhamnoides*), the berries are used;

**Single-seed hawthorn:** hawthorn blossoms contain flavonoids (hyperoside, quercetin, vitebsin), phenolcarbonic acids, leavening agents, saponins, some essential oil. The fruits contain 2-5% of flavonoids (hyperoside), leavening agents, organic acids, about 10% saccharides, pectins, carotenoids, fatty oils, saponins. Hawthorn preparations have a cardiotonic effect, which strengthens the heart muscle and reduces the count of its contractions (pulse). It also has a calming effect and slightly lowers the blood pressure. Medicinal properties: Hawthorn preparations reduce the sensitivity of central nervous system and tone the heart muscle. Preparations made from hawthorn raw material are considered to be a good means of preventing and treating cardiovascular disease in elderly people. They are used as a means to regulate the heart rate, dilate the blood vessels of the heart and brain, and lower the blood pressure. They are used for treating in the early stages of hypertension or as an aid in arrhythmia and tachycardia; they improve sleep, cardiovascular and cerebral blood flow in patients with heart disease. They are recommended for treatment and prevention of atherosclerosis. *Study course and most favourable natural bee feeding conditions:* Both fresh and dried hawthorn berries can be used for preparation of bee feeding syrup. Fresh berries are used in autumn feeding and honey production, and dried berries in spring. Hawthorn berries ripen in September, so the berries are dried at +40-45°C for 3-4 days depending on berry morphology. The berries are dark red before drying, and after drying the fruits change to become wrinkled, dark red, with a faint odor and astringent taste. The dried berries are stored in a well-ventilated, low-humidity room with controlled temperature of 20-22°C.

**Sea buckthorn:** Sea buckthorn is a unique and valuable plant with medicinal and nutritional properties. Sea buckthorn fruits have anti-inflammatory, antimicrobial and analgesic effects, promote tissue regeneration, strengthen the immune system and are used as a preventive measure against cancer and cardiovascular diseases. Polyphenols contained in sea buckthorn fruits have antioxidant properties and can protect the human body from the harmful effects of oxidized radicals. Sea buckthorn fruits have a variety of therapeutic effects due to the presence of various compounds; their main pharmacological-physiological effects are listed in Table 1. The pharmacological effects of sea buckthorn are also determined by vitamins, trace elements, amino acids and other biologically active compounds such as β-carotene, zeaxanthin, lycopene, flavonoids, folic acid, triterpenes, and fatty acids.

**Table 1. Compounds contained in sea buckthorn berries and their medicinal properties.**

| **Compound** | **Medicinal properties** |
|---|---|
| Tocopherols | Act as antioxidants, prevent oxidation of lipids and help reducing pain. |
| Carotenoids | Act as antioxidants and participate in collagen synthesis and epithelialization. |
| Vitamin K | Maintains normal blood coagulation, stops bleeding, promotes wound healing, has anti-ulcer effect. |
| Vitamin C | Acts as an antioxidant, maintains the integrity of cell membranes, and accelerates collagen synthesis. |
| Vitamin B complex | Promotes cell renewal and nerve regeneration. |
| Phytosterols | Improve microcirculation in the skin, have anti-ulcer, anti-atherogenic and anti-cancer effects. Control the inflammatory process. |
| Polyphenolic compounds | Act as antioxidants, with intrinsic cell protective and cardio protective effects. Promote wound healing. |
| Polyunsaturated fatty acids | Have immunomodulatory, neuro-protective and antitumor effects. |
| Organic acids | Reduce the risk of heart attack and stroke. Have an anti-ulcer, anti-arthritic and wound healing effect. |
| Coumarins and triterpenes | Participate in regulating appetite, sleep, memory and learning. |
| Zinc | Strengthens blood circulation, acts as a cofactor for enzymes. Required for Vitamin A action. |

*Study course and most favourable natural feeding conditions:* Sea buckthorn berries ripen in the second half of August - September. During this period, the bee colonies are already preparing for the winter season, so bees can also be fed with sea buckthorn syrup and allowed to harvest honey with sea buckthorn composition and medicinal properties. Sea buckthorn berry juice, fresh (in the fall) or frozen (in the spring), is used to prepare the bee feeding medicinal syrup. When preparing the juice for spring, the squeezed juice is immediately cooled to -22°C, kept at that temperature over the winter, and thawed at room temperature during the spring season to make it suitable for the production of bee feeding syrup.

In sea buckthorn berries, sea buckthorn oil is useful for bees. The source BIOLOGIJA. 2017. Vol. 63. No. 2. P. 177-184 The effect of thyme (Thymus caucasicus) ethanol extract on Varroa mite (Varroa destructor), an ectoparasite mite of Apis mellifera meda (Hym: Apidae) states that sea buckthorn extract has insecticidal properties. When treating bees with a mixture of sea buckthorn juice, oil and honey, the bees are fed, sprayed or sprinkled to ensure that the juice and oil are not separated into layers and that the mixture of the same juice-to-oil ratio is equally distributed to all the bee colonies.

Another empirically observed positive effect of bee feeding with sea buckthorn juice is that sea buckthorn fruits contain surface mold. After transformation of sea buckthorn fruits into bee nourishment syrup, this mold gives the bee nourishment syrup antibiotic properties against bee parasites. At the same time, sea buckthorn fruits contain vitamins that enhance the bee's resistance to parasites, including Varroa mites. Therefore, the Varroa mites perish and die due to this complex effect of antibiotics and vitamins on bees and mites, and after spraying or sprinkling bees with sea buckthorn juice they become more active and start cleaning themselves, thereby getting free of the mites that die when separated from the bees. It has also been observed that mites no longer appear in bee broods in this case.

**Black currant:** black currant berries contain vitamin C, d-pyrene, sabinene, caryophyllene, and compounds of other substances. They also contain fiber, sugar (fructose, glucose, rhamnose), lemon, tartaric, succinic and salicylic acids, pectines, leavens, flavanoids, minerals (aluminum, iron, phosphorus, manganese, sodium, calcium, silver, folic acid, potassium, and magnesium). Vitamins: C, P, B1, B2, B6, B3, E, K, PP. The substances contained in the berries have astringent, perspire-inducing properties. They stimulate urination, heal inflammation. Currant berries help to deal with avitaminosis, anemia, and when appetite worsens, they stimulate it. It is advisable to drink blackcurrant juice with honey in case of bronchitis, laryngitis. *Study course and most favourable natural feeding conditions:* Ripe blackcurrant berries are harvested during the summer period, June to July, depending on the environmental conditions. In the best variant of the preparation of bee feeding syrup and examination of the results, berry juice is used in a weight of 4 kilograms, which is mixed with 4 kilograms of honey. This syrup is fed to bees every 3 days until the honeycombs are also filled with it. The amount of feeding syrup with currant juice may be higher if the bees are active and the honey is processed faster during this season. The best time to feed bees is when the weather gets colder and rainy.

**Great nettle:** Nettle leaves contain 19.7% of proteins, 3.6% of fats, 15-18% of ash, 22.3% of cellulose (up to 30% during flowering), 7.4% of beagle matter, low levels of sugar, formic acid, tannides, glycoside urticin, 15-19% of various minerals: high levels of calcium (2.4-7.9%), potassium, sodium, magnesium, iron, silicon, sulfur, chlorine; vitamins: C = 0.6%, K, B2, B3; protoporphyrin, coproporphyrin, cytosterol, histamine, enzymes (oxidase, peroxidase, chlorophylase), carotene (47.8-116 mg% and up to 700 mg% in young plants), xanthophil, xanthophyllepoxide, violaxantin, 2-5% of chlorophyll (up to 7% in young plants). The stinging hairs contain volatile nitrogen-free toxin, also formic, fatty acids and low levels of alkaloids. Great nettle preparations are used to treat anemia (increase amount of hemoglobin and red blood cells in blood), diabetes, paralysis, arthritis, skin conditions, burns and difficult-to-heal wounds. *Study course and most favourable natural feeding conditions:* The test plants are collected between May and September, depending on the environmental conditions. In the best variant of the preparation of bee feeding syrup and examination of the results, 3 kilograms of nettle juice are mixed with 1 kilogram of honey. The resulting syrup is poured into bee feeders. At the beginning of feeding, 4 liters of nettle & honey syrup is added to the feeder every 4 days, as the bees are weaker at the beginning of the season, which can make it harder to absorb the syrup and produce the honey to the honeycombs. At the same time, the speed at which bees are able to process the syrup is monitored, and if the bees are noted for greater capacity, the amount of syrup that is subsequently fed to the feed can be increased.

**Cucumber:** Cucumber blossoms, cucumbers fruits, fruit juice, bark, seeds and leaves are used for medicinal preparations. Cucumbers and their juice soothe the nervous system, reduce cough, promote urinary and bile secretion, secretion of digestive glands, and have laxative, anti-inflammatory, emollient and analgesic properties. Fresh cucumber juice is used in case of respiratory diseases, coughing, and constipation. In folk medicine cucumbers are used to cure cardiovascular atherosclerosis, hypertension, also kidney and liver diseases. Cucumber juice, mixed with honey, is used in cosmetics as a means of revitalizing the skin: for this purpose large (overgrown) cucumber fruits are to be used with the largest amount of cucumber jelly around the seeds as the most suitable substances for honey and cucumber syrup production. *In the best variant of the preparation of bee feeding syrup and examination of the results: 3* kilograms of cucumber juice are mixed with 1 kilogram of honey. The resulting syrup is poured into bee feeder inside the hive. At the beginning of feeding, 4 liters of cucumber & honey syrup is added to the feeder every 4 days. During this period, the bees' ability to process the syrup must be monitored: if the bee colonies have sufficient capacity, more syrup can be added later.

**Lemon:** Lemons have long been known for their nutritional and healing properties: they are rich in vitamin C, prophylactically help to prevent various diseases and also have anti-cancer properties. The lemons are used in different ways: by eating, by producing drinkable products and preparations, externally in the form of ointments and pledgets, in aromatherapy. In the present invention there is also another important aspect: lemon essential oil is known as one of the most effective treatments against varroa destructor, varroa mites. Therefore, lemon is a plant suitable for the production of bee feeding syrup and, when fed to bees, is likely to have a complex effect: feeding and treating bees, as well as obtaining selective honey with a modified composition and healing properties. *In the best version of the preparation of bee feeding syrup and examination of the results,* 2 kilograms of lemon juice are mixed with 2 kilograms of honey and 1 kilogram of warm water. The resulting syrup is poured into bee feeder inside hive. Feeding pattern as with other syrups: 5 kg of lemon & honey syrup is added to the hive feeder every 4 to 5 days, while bees are monitored for their ability to process the syrup. The time and amount of subsequent syrup refill are adjusted accordingly.

**Mistletoe:** The healing properties of mistletoe have long been recognized and it has been used to treat cardiac disorders of a nervous nature. Mistletoe preparations have a spasmolytic effect, reduce blood pressure and nervous system excitability, are suitable for the treatment of atherosclerosis, mild hypertension, means to stop the bleeding (for example, to stop nosebleeds), for treatment of epilepsy and nerve disorders. Mistletoe, due to its potent and toxic protein substances (viscotoxins) and glycoproteins (lectins), acts to lower blood pressure, kill cancer cells and increase the body's resistance. The greatest effect is achieved when mistletoe preparations are administered by parenteral route (for example, by subcutaneous injection) or absorbed through the mucous membrane; then they are effective, but can also cause side effects. The mistletoe accumulates the potent protein substances, viscotoxins, and glycoprotein lecithin, choline, acetylcholine, ascorbic acid, carotene, resins, flavonoids, minerals. Infusions, extracts, tinctures and fresh juices are included in the composition of blood circulation enhancers. Selective honey with mistletoe may have enhanced healing properties or additional ones. Such honey is obtained by feeding the bees with the syrup containing the mistletoe juice and when bees carry it to honeycombs. *In the best variant of the preparation of bee feeding syrup and examination of the results,* young mistletoe twigs with leaves are cut in the late autumn and winter from fallen or felled trees by means of secateurs. The twigs are squeezed to obtain juice which is stored frozen until spring at -20-22°C. In the spring, the feeding syrup is prepared by mixing 2 kilograms of mistletoe juice, 3 kilograms of honey and 1 kilogram of water.

In bee medicinal syrups, the proportions of the components can be varied in wide limits depending on the consistence of the honey, the plant juice and the purpose of the bee's nutrition. For example, if the bees are fed with pure sea buckthorn juice for prophylactic and curative purposes, the honey may only be added in such amounts so that the bees start eating the juice, for example by adding about 20% by weight of honey. In this case, the juice to honey ratio in the feeding syrup is 100: 20. With less than 20% honey added, the syrup is too sour for the bees.

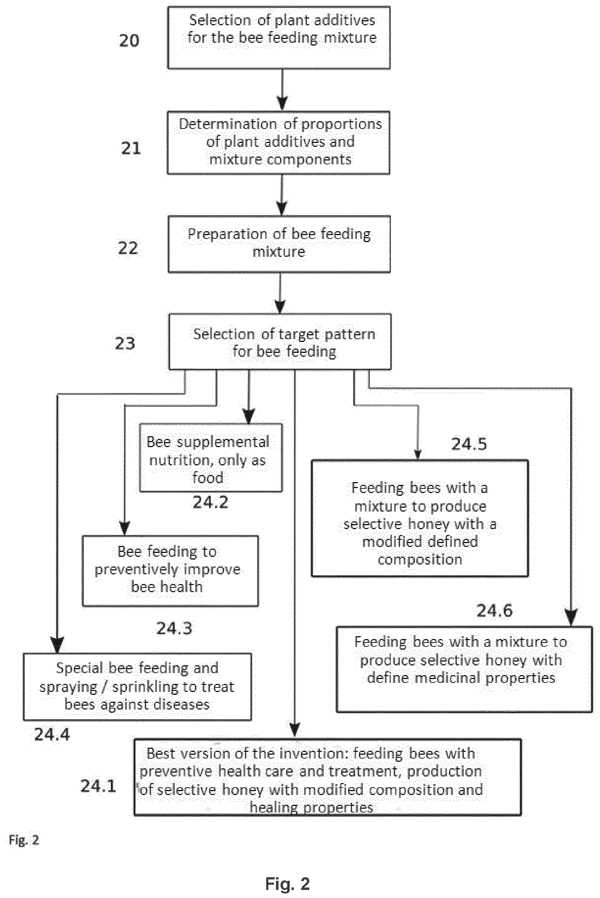

**Bee feeding versions and expected results.** Fig. 2 illustrates steps of preparing and using (feeding) the composition, comprising at least the following steps:
- (20) - selection of plant additives for bee feeding syrup;
- (21) - selection of proportions of syrup components;
- (22) - component preparation (soaking, grinding) and syrup preparation. It should be noted that syrups use natural additives without heat treatment (boiling, heating, parboiling with water, etc.) to preserve plant vitamins and nutrients;
- (23) - selection of target regime for bee feeding;
- (24.1)-(24.6) - feeding bees according to the selected pattern.

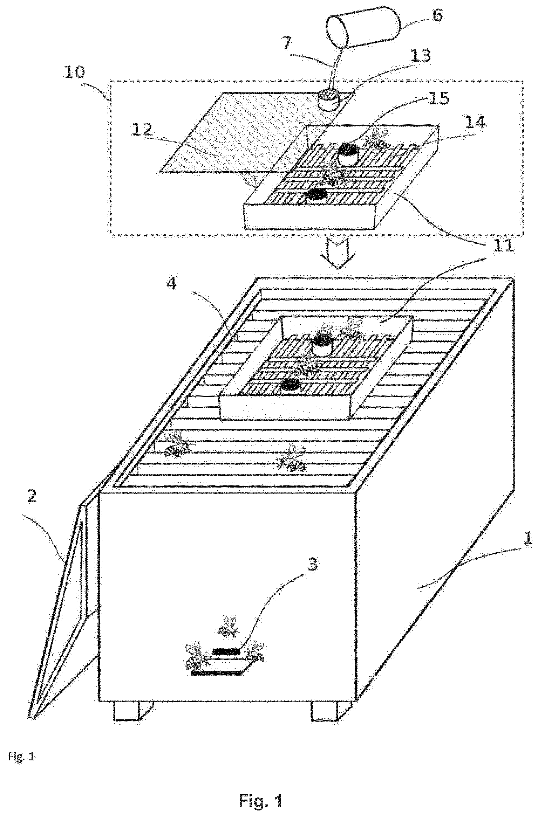

The syrup preparation versions and bee feeding patterns described above are considered to be the *preferred embodiment of the present invention* for each plant as shown (24.1 Fig. 2). This means that the composition and consistence of the feeding syrup is chosen so that the bees will eat the syrup in a balanced way and carry the excess in their abdomen sacs to the honeycombs of the hive. It is a feeding pattern that provides quality bee nutrition with health promotion and disease prevention, and also additional generation of natural (secondary) honey with altered composition and healing properties transferred naturally and safely from the plant to the honey in honeycombs of the hive. According to the best version of the invention (24.1, Fig. 2), closing of bees in the hive or other measures restricting the free movement and feeding of bees are not used. The bees are fed from a feeder (10), the structure of which is illustrated in Figure 1. The feeder consists of a plastic trough (11) with bee inlets (15) at the bottom for the bees to enter and exit the feeder. At the bottom of the trough (11), a wooden grill (14), which floats on the surface of the syrup depending on the level of syrup filled, is floated and the bees collect the syrup from the trough (11) while sitting on the grill (14) without a risk of drowning in the syrup. The feeder trough (11) is covered from above with a transparent cover (12), in which a syrup filling opening with a sieve (13) is arranged. This opening allows the beekeeper to replenish the contents of the feeder (10) with additional syrup quickly and without interfering with the work of the bees. The feeder (10) is placed in the hive (1) on top of the honeycomb frames (4) as shown in the Fig. 1. As the bees walk on the honeycomb frames (4) in the hive, they can enter the feeder (10) through the tubular openings (15), collect the syrup into their abdomen sacs and bring it to the honeycomb frames (4).

According to the second version (24.2, Fig. 2) bees may be fed with syrup only to the extent necessary to feed themselves and not to store excess syrup in the honeycomb frames. The weight ratio of the medicinal plant in the syrup is selected at the discretion of the beekeeper or as indicated in the preferred version of the invention.

According to the third version (24.3, Fig. 2), the bees are fed with syrup in which concentration of a medicinal plant is increased to such extent that it is still acceptable for the bees to eat, but the feeding is intended solely to enhance bee health with disease prevention. For example, for preventive health care, bees may be repeatedly fed fresh sea buckthorn juice with a minimum amount of honey added to allow the bees to start eating the mixture at a weight ratio of 100:20, since sweetening sea buckthorn juice with honey at a lower ratio will result in juice being too sour for the bees.

According to the invention (24.4, Fig. 2), which is intended for treating bees more than feeding them, the bees are sprinkled or sprayed with a mixture of sea buckthorn, which contains sea buckthorn juice and, in particular, sea buckthorn oil, while ensuring that in the course of spraying or sprinkling the same ratio of juice and oil is equally applied to all the bee colonies. It is known from research and other patent applications that plant essential oils, such as mint, peppermint, cinnamon, lemongrass are used to prevent varroatosis. Essential oil naturally prevents diseases and activates bee self-cleaning instincts. Sprinkled or sprayed with solution of essential oil, bees clean each other and help each other get rid of parasites. Similar solution for treating the bees is described in patent application US20070026765A1, wherein synthetic and natural essential oils of mint, cinnamon, lemongrass and other plants containing essential oils are used, where the essential oils are mixed with water and the bees are sprinkled or sprayed periodically with this mixture.

According to the fifth version (24.5, Fig. 2), where the bees in the hive are healthy and strong, for some time they can be fed with medicinal syrup only and prevented from collecting flower nectar from elsewhere, such as from the fields during honey gathering. In this case, selective honey with modified and pre-known composition will be produced. This means that the bees will carry only the medicinal syrup from the feeder (10) into the honeycombs, mixing it with their own saliva, and this honey will be free of external impurities. Such method of taking the previously harvested honey and separating the bees from the environment has been disclosed in several similar inventions, for example RU2355164, RU2013127697, RU2129361C1, and using this method the composition of the secondary, selective honey can be controlled.

According to the sixth variant (24.6, Fig. 2), where the bees are fed with medicinal syrup of selected proportions only and prevented from collecting flower nectar from elsewhere, selective honey with known medicinal properties is produced. Bees are fed with syrup containing known amount of additives / substances with medicinal properties, such as hawthorn berry extract. The selective honey produced by the bees will contain close relative amount of the aforementioned medicinal substances, which will give it the healing properties provided by the addition of the appropriate amount of the respective medicinal substances to the syrup. For example, as described in patent application RU2355164, for treatment of respiratory tract with a lucerne additive, or WO2017013661A1, for relief of pain in certain conditions with cannabinoids.

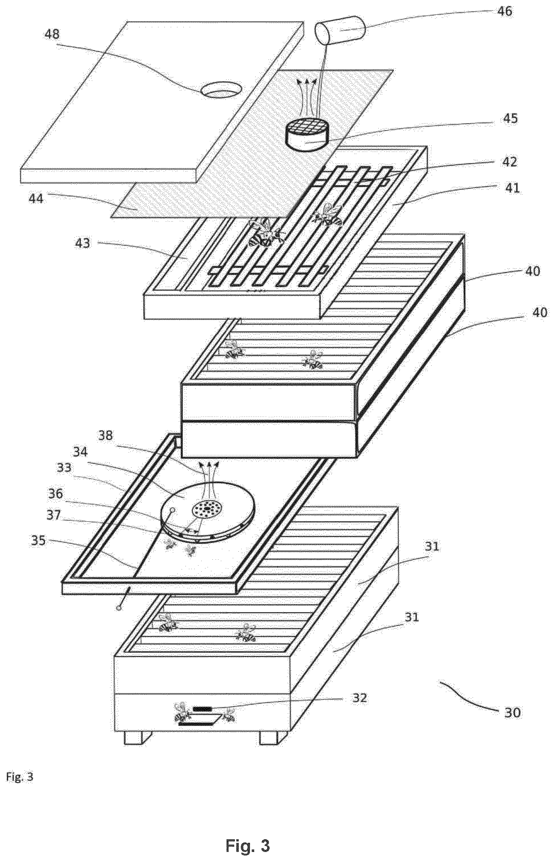

To make the bees collect honey only from the feeder and not from outside the hive, a proper temperature and ventilation mode and bee movement control shall be ensured in the hive. One of the ways to produce selective honey is to ensure the right temperature and ventilation for the bees working in the hive. This can be achieved by, for example, using a hive in which the levels (31) (honeycomb frames) with the external bee-entrance (32) of bee colony (nest) are separated from the selective honey production levels (40), honeycomb frames and the feeder with syrup (41). Such structure of the hive (30) is shown in Fig. 3. In the hive, at least the first two levels (31) are for the bee colony and ordinary movement of bees through the bee-entrance (32) of the hive to collect the nectar in the field. Further, on the top of the first levels (31), a level separation segment (33) is provided, comprising a bee outlet (34) with outlets (37) and bee inlet and outlet states (36), an outlet control lever (35), and ventilation grill (38) of hive levels. Further, in addition to the separating segment (33), a mesh can be used, which does not allow the bee queen to enter the upper levels of the hive and only the worker bees can pass through it. Further, at least one level for selective honey collection with honeycomb frames (40) is arranged on the separating segment (33). Further, a bee feeder with syrup (41) having a wooden grill (42), floating on the surface of the syrup and a bee passage (43), through which the bees move between the feeder (41) and the selective honey levels (40) is arranged on top of these levels. The top of the feeder (41) is permanently covered with a transparent cover (44), such as an Plexiglas cover, with an opening (45) having a sieve; the transparent lid (44) allows to monitor the bees in the feeder for a short period of time; the opening allows to conveniently pour the required amount of feeding syrup (46), and the opening (45) also provides effective ventilation of the upper levels (40) of the hive. During a longer period of time, a cover (hive hood) (48) impermeable to light, heat and humidity and having a slot that matches the syrup filling and ventilation opening (45) is placed on top of the transparent cover (44). In such a hive bees live on the lower levels (40) in a so-called bee colony nest. During selective honey production, the feeder (41) is filled with the feeding syrup (46), then the bee outlet (34) is opened to allow the bees to enter the levels of the selective honey (40). After achieving sufficient number of bees on these levels (40), the bee outlet (34) is toggled into the outlet mode. The bees on the upper levels (40) move only between the feeder (41) and the honeycomb frames, transferring the syrup collected in the feeder to the honeycomb frames, and such movement of the bees takes place until the feeder empties or the honeycomb frames of top levels (40) become full. As the honey harvested from the syrup on the upper levels (41) of the hive matures, the bees themselves pass through the passages (51) of the outlet (34) exit to the lower levels (31) of the hive.

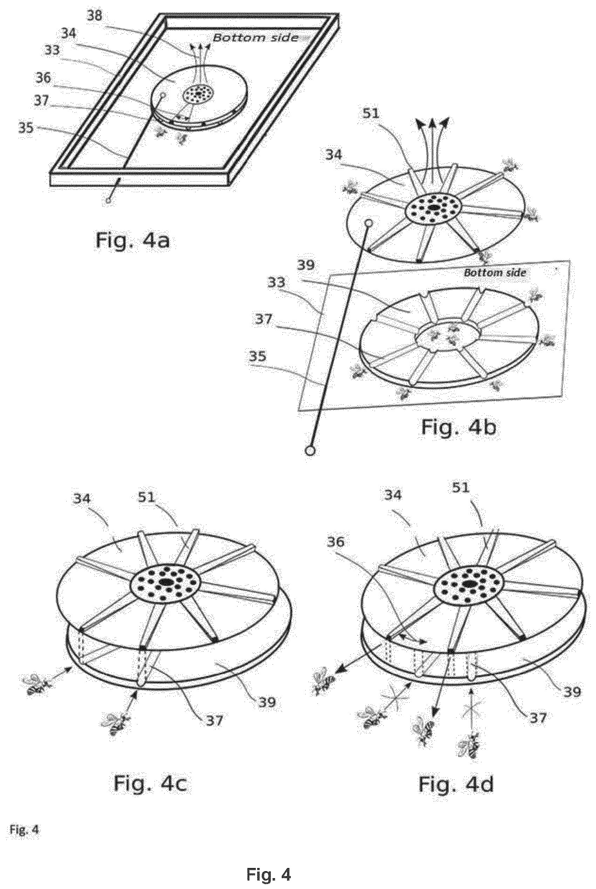

The bee outlet (34) is shown in Fig. 4. Its structure differs from the structure of standard 8 or 16 passage outlets (Fig. 4a). The outlet (34) consists of two discs and has two modes (Fig. 4b). One disc (34) is a standard disc bee outlet with 8 or 16 outlet passages (51) and a ventilation grille. Its passages (51) are narrowing, so that the bees can pass through the outlet passages in one direction only. The second disk (39) is fixedly attached to the segment (33), separating the levels of the hive, and has shallow (about 4 mm in depth) troughs (37) on its inner surface, the arrangement of which corresponds to the passages (51) of the first disk. The depth of these troughs (37) is too small for the bee to enter the opening of the trough (37), but if the troughs (37) are aligned with the passages (51) of the first disk, then the bees through the "extended" passages (Fig. 4c) can enter the separated levels (40) of the hive. Thus the outlet (34) has the bee inlet mode (Fig. 4c) and the bee outlet mode (Fig. 4d), and switching between the modes is manipulated by means of the lever (35).

The ratio by weight of the components of the bee feeding syrup may vary in wide range, depending on the feeding purpose and the properties of the syrup components. For example, food to support bee health can consist almost entirely of fresh sea buckthorn juice with only a little honey added. And when producing a honey product with a modified composition, a mixture by weight of 2 kilograms of ground hawthorn berries, 2 kilograms of honey, 2 kilograms of sea buckthorn juice and 1 liter of water is used. However, this weight ratio may also vary depending on whether fresh or dried hawthorn berries are used, the density of the honey, the amount of water required making the syrup properly liquid for bees to feed, and so on.

**Description of the production of honey product with modified composition.** The resulting bee product is intended to improve human health and wellness. The following describes the autumnal production version in September, when medicinal plants are harvested and used fresh for production.

Two medicinal plants were selected for the production of the product: single-seed hawthorn and sea buckthorn. The berries of these plants were harvested in the forest area. Hawthorn is known for its healing properties; it improves heart function, strengthens blood circulation and has a positive effect on the nervous system. Sea buckthorn fruits have anti-inflammatory, antimicrobial effects, promote tissue regeneration, strengthen the immune system and are used as a measure against cancer and cardiovascular diseases. A honey product with vitamins, various acids and chemical compounds contained in these two plants was developed in a purely natural way by feeding the bees with hawthorn and sea buckthorn syrup.

As usual, feeding of the bees in the bee farm before the winter period begins in August. The selected bee colony, which is to be fed with medicinal syrup, does not receive any anti-tick drugs during this pre-winter feeding. During August, the fed bees fill the honeycomb frames of their nest with winter syrup.

At the beginning of September, after all the bees are fully fed before winter, additional empty honeycomb frames (for example, by means of additional level of the hive) are arranged in the intended hive and the preparation of bee feeding syrup with medicinal plant additives begins.

The harvested fresh hawthorn berries are ground and 2 kilograms of honey is added to 2 kilograms of ground berry pulp. The berry pulp and honey are then mixed and the mixture is kept for 12 hours at room temperature to allow some of the active hawthorn substances to "pass" into the honey. The resulting mixture is viscous and dense, but due to the action of honey, it gradually liquefies.

The fresh sea buckthorn juice is then squeezed, of which 2 kilograms are also weighted. The squeezed fresh juice must be used quickly to prevent fermentation. Next, the mixture of hawthorn and honey is mixed with sea buckthorn juice and the whole mixture is diluted with 1 liter of warm water so that the resulting feeding syrup is sufficiently liquid for bees to consume. The resulting weight yield of the feeding syrup is 7 kilograms. The resulting feeding syrup is poured into the bee feeder inside the hive. The selected bee colony is fed twice again, during September, with syrup of such composition, volume and weight ratio. In total, the selected bee colony was fed 3 times, each time adding 7 kilograms of syrup to the feeder, and in total 21 kilograms of syrup was used.

In this particular case, since the honeycomb frames of the bee nest in the hive are not separated from additional honeycomb frames, some of the syrup with medicinal plant additives may also get into the honeycomb frames of bee nest. Part of the medicinal syrup will be consumed by the bees themselves during processing, and the rest of the syrup will be transported to additionally placed honeycomb frames. Also, part of the weight of the syrup is lost due to evaporation of water during the honey-carrying and maturation in the honeycombs. As the feeding was discontinued at the end of September, 8 kilograms of honey product with medicinal plant (hawthorn and sea buckthorn) additives were removed from additional honeycomb frames. Resulting yield: 8 kilograms of honey from 21 kg of syrup poured into the feeder. Compared to other colonies, this bee colony is much more active because it was fed with this medicinal syrup. The described technology of bee feeding and honey production is being further developed and researched.

In another version of such honey production, the production takes place in spring and summer, from March to August. The exact, most appropriate period may vary from year to year, depending on natural conditions, bee colony activity and ability to produce honey. Unlike autumnal production, spring-summer syrup is made from dried hawthorn berries and sea buckthorn juice that has been squeezed and frozen in autumn. Optimal storage temperature for frozen sea buckthorn juice during winter: minus 20-22°C. In this production variant 800 grams of dried and powdered hawthorn berries are mixed with 2 kilograms of honey, and then the mixture is kept at room temperature for 12-24 hours. Then 2 kilograms of fast-thawed sea buckthorn juice and about 2.2 liters of warm water are added to the mixture. In this way, the resulting weight of the bee feeding syrup is also 7 kilograms, as in the autumnal production version. The resulting syrup is poured into a feeder in the hive, where the bees collect the syrup and carry it to the honeycomb frames of the hive. In this production variant, feeding intervals and syrup quantities are the same as those in the autumn, but may be subject to change depending on natural conditions and the activity of the bees, which requires monitoring by the beekeeper.

Specific quantities and proportions of the above mentioned components of bee feeding syrup (hawthorn, sea buckthorn, honey and water) may vary depending on the desired characteristics of the honey product being produced, its intended composition and its accuracy. As far as the honey production is concerned, the components can be mixed in a variety of proportions that are acceptable and harmless to the bees so that they eat the syrup and carry it to the honeycomb frames of the hive.

In still other honey product versions, single plant additives may be used to prepare the bee feeding syrup and the syrup components shall be mixed in the proportions given in Table 2.

**Table 2. Composition and parts of bee syrup with plant additives.**

| **Medicinal plant additive** | **Weight of medicinal plant additive (kg)** | **Honey, weight (kg)** | **Water, weight (kg)** | **Syrup yield, weight (kg)** |
|---|---|---|---|---|
| Fresh hawthorn: ground berry pulp | 2 kg | 2 kg | 1 kg | 5 kg |
| Dried hawthorn: ground powder | 0.8 kg | 2 kg | 2.2 kg | 5 kg |
| Buckthorn: juice, fresh or frozen | 2 kg | 2 kg | 1 kg | 5 kg |
| Lemon: juice | 2 kg | 2 kg | 1 kg | 5 kg |
| Black currant, berries: juice | 4 kg | 4 kg | - | 8 kg |
| Nettle: juice | 3 kg | 1 kg | - | 4 kg |
| Cucumber: juice | 3 kg | 1 kg | - | 4 kg |

**Production of honey with mistletoe juice.** A pilot bee honey product has been developed for the treatment of human illnesses for which the use of mistletoe is provided. Since mistletoe contains poisonous substances, for example, it is considered as "unsafe" by the US Food and Drug Administration (FDA), so the use of mistletoe honey is only possible with the prescription of a physician and under the supervision of an experienced physician.

Only closed production methods 24.5 and 24.6, in which the bees carry syrup to the honeycomb frames in the isolated part of the hive only and not to the other honeycomb frames, may be used for the production of honey product with mistletoe additive. Bee feeding syrup with mistletoe juice is prepared in the proportions given in Table 3.

**Table 3 Composition and parts of bee syrup with mistletoe juice.**

| **Medicinal plant additive** | **Weight of medicinal plant additive (kg)** | **Honey, weight (kg)** | **Water, weight (kg)** | **Syrup yield, weight (kg)** |
|---|---|---|---|---|
| Juice of mistletoe twigs | 2 kg | 3 kg | 1 kg | 6 kg |

Only the twigs of mistletoe are used for the syrup. The berries are not used since they are poisonous. The feeding takes place in spring and honeycomb frames of the hive are refilled periodically 3-4 times each with 4-6 kilograms while monitoring the activity of the bee colony and its ability to produce honey.

## Claims

1. A composition comprising sea buckthorn berries with their natural oil and mold for use in a method for the treatment of honey bee families against varroatosis and American foulbrood.

2. The composition according to claim 1, **characterized in that** it is used by at least steps of:
- preparation of the composition from honey, water and juice of sea buckthorn berries with their natural oil and mold;
- feeding, sprinkling or spraying honey bees with this composition.

3. The composition according to claims 1 to 2, **characterized in that** sea buckthorn berry juice is used fresh or defrosted from the previously frozen fresh sea buckthorn juice.

4. The composition according to claim 1, **characterized in that** it is used as a regular bee food for healthy honey bees whereby containing sea buckthorn berry juice from 0.5% to 40% by weight.

5. The composition according to claim 1, **characterized in that** during the honey gathering season, the honey bees are fed periodically with the composition consisting of 80% by weight of fresh juice from sea buckthorn berries with the natural mold, and 20% by weight of bee honey.

6. The composition according to claim 5, **characterized in that** the feeding frequency of the honey bees is 1 to 3 times per month.

7. The composition according to claim 1, **characterized in that** without feeding the bee families according to claims 5-7, said bee families are periodically sprayed or sprinkled with the fresh juice from sea buckthorn berries having their natural oil and mold.

8. The composition according to claim 7, **characterized in that** the frequency of sprinkling or spraying of the bee hive with the composition is between 1 and 4 times per month.

## Patentansprüche

1. Zusammensetzung, die Sanddornbeeren mit deren natürlichem Öl und Schimmel umfasst, zur Verwendung in einem Verfahren zum Behandeln von Honigbienenfamilien gegen Varroatose und Amerikanische Faulbrut.

2. Zusammensetzung nach Anspruch 1, **dadurch gekennzeichnet, dass** sie zumindest durch die Schritte verwendet wird:
- Herstellen der Zusammensetzung aus Honig, Wasser und Saft von Sanddornbeeren mit deren natürlichem Öl und Schimmel;
- Füttern, Benetzen oder Besprühen von Honigbienen mit dieser Zusammensetzung.

3. Zusammensetzung nach den Ansprüchen 1 bis 2, **dadurch gekennzeichnet, dass** Sanddornbeerensaft frisch oder aus dem zuvor gefrorenen frischen Sanddornsaft aufgetaut verwendet wird.

4. Zusammensetzung nach Anspruch 1, **dadurch gekennzeichnet, dass** sie als reguläres Bienenfutter für gesunde Honigbienen verwendet wird, wobei es Sanddornbeerensaft zu 0,5 Gew.-% bis 40 Gew.-% enthält.

5. Zusammensetzung nach Anspruch 1, **dadurch gekennzeichnet, dass** die Honigbienen während der Honigsammelsaison regelmäßig mit der Zusammensetzung gefüttert werden, die zu 80 Gew.-% aus frischem Saft von Sanddornbeeren mit dem natürlichen Schimmel und zu 20 Gew.-% aus Bienenhonig besteht.

6. Zusammensetzung nach Anspruch 5, **dadurch gekennzeichnet, dass** die Fütterungshäufigkeit der Honigbienen 1 bis 3 Mal pro Monat beträgt.

7. Zusammensetzung nach Anspruch 1, **dadurch gekennzeichnet, dass** die Bienenfamilien ohne die Fütterung der Bienenfamilien nach den Ansprüchen 5 bis 7 regelmäßig mit dem frischen Saft von Sanddornbeeren mit deren natürlichem Öl und Schimmel besprüht oder benetzt werden.

8. Zusammensetzung nach Anspruch 7, **dadurch gekennzeichnet, dass** die Häufigkeit des Benetzens oder Besprühens des Bienenstocks mit der Zusammensetzung zwischen 1 und 4 Mal pro Monat beträgt.

## Revendications

1. Composition comprenant des baies d'argousier avec leur huile naturelle et leur moisissure destinée à être utilisée dans un procédé de traitement des familles d'abeilles mellifères contre la varroatose et la loque américaine.

2. Composition selon la revendication 1, **caractérisée en ce qu'**elle est utilisée par au moins les étapes consistant à :
- préparer la composition à partir de miel, d'eau et de jus de baies d'argousier avec leur huile naturelle et leur moisissure ;
- nourrir, arroser ou pulvériser les abeilles avec cette composition.

3. Composition selon les revendications 1 à 2, **caractérisée en ce que** le jus de baies d'argousier est utilisé frais ou décongelé à partir du jus d'argousier frais préalablement congelé.

4. Composition selon la revendication 1, **caractérisée en ce qu'**elle est utilisée comme aliment régulier pour les abeilles mellifères en bonne santé, contenant du jus de baies d'argousier de 0,5 % à 40 % en poids.

5. Composition selon la revendication 1, **caractérisée en ce que** pendant la saison de récolte du miel, les abeilles mellifères sont nourries périodiquement avec la composition constituée de 80 % en poids de jus frais de baies d'argousier avec la moisissure naturelle, et de 20 % en poids de miel d'abeille.

6. Composition selon la revendication 5, **caractérisée en ce que** la fréquence d'alimentation des abeilles est de 1 à 3 fois par mois.

7. Composition selon la revendication 1, **caractérisée en ce que** sans nourrir les familles d'abeilles selon les revendications 5 à 7, lesdites familles d'abeilles sont périodiquement pulvérisées ou aspergées avec le jus frais des baies d'argousier ayant leur huile naturelle et leur moisissure.

8. Composition selon la revendication 7, **caractérisée en ce que** la fréquence d'arrosage ou de pulvérisation de la ruche avec la composition est comprise entre 1 et 4 fois par mois.
